# EUROPEAN PATENT APPLICATION

(11) **EP 2 730 391 A1**
(43) Date of publication of application: **14.05.2014**
(21) Application number: 13167273.5
(22) Date of filing: 10.05.2013
(51) Int. Cl.: B29C 51/02, B29C 51/32, B29C 51/04, B29C 51/08, B29C 51/14, B29C 51/42, B29C 51/44, A45D 31/00

(54) **Method for manufacturing artificial nails and artificial nails manufactured by the method**

(30) Priority: 13.11.2012 KR 20120127922
(71) Applicant: Chang, Sung Yong, New York, NY 11577 (US)
(72) Inventor: Chang, Sung Yong, New York, NY 11577 (US)
(74) Representative: Gassner, Wolfgang

(57) **Abstract**

Disclosed is a method for manufacturing artificial nails, each of which includes a cuticle end to be attached to the cuticle of a fingernail and a free edge disposed opposite the cuticle end. The method includes: a preparation step of supplying a film (110) including a planar design surface and a bent support surface formed opposite the design surface; a design step of forming artificial nail patterns on areas of the design surface of the film defined by first end portions formed at the cuticle ends and second end portions formed at the free edges, the artificial nail patterns being formed such that the first end portions and the second end portions are formed at locations where the cuticle ends are smaller in thickness than the free edges; and a body molding step including a molding operation of forming the film into three-dimensional shapes in shaping molds including a plurality of artificial nail casts with fingernail shapes and reference plates connecting the artificial nail casts, and a cutting operation of cutting the film formed with a plurality of fingernail shapes into the individual fingernail shapes by a cutter located above the shaping molds (210, 220). According to the method, the wearability of the artificial nails can be improved and the strength of the tips of the artificial nails can be maintained. In addition, various patterns can be applied to the artificial nails during the design printing.

## Description

### BACKGROUND OF THE INVENTION

### 1. Field of the Invention

The present invention relates to a method for manufacturing artificial nails, and more specifically to a method for manufacturing artificial nails by which designs of three-dimensional artificial nails can be elaborately printed by various screen printing techniques instead of by curved surface printing, the strength of the tips of the artificial nails can be maintained, and the thickness of the artificial nails may be varied at different positions thereof so that the wearability of the artificial nails at cuticle ends attached to the cuticles can be improved.

### 2. Description of the Related Art

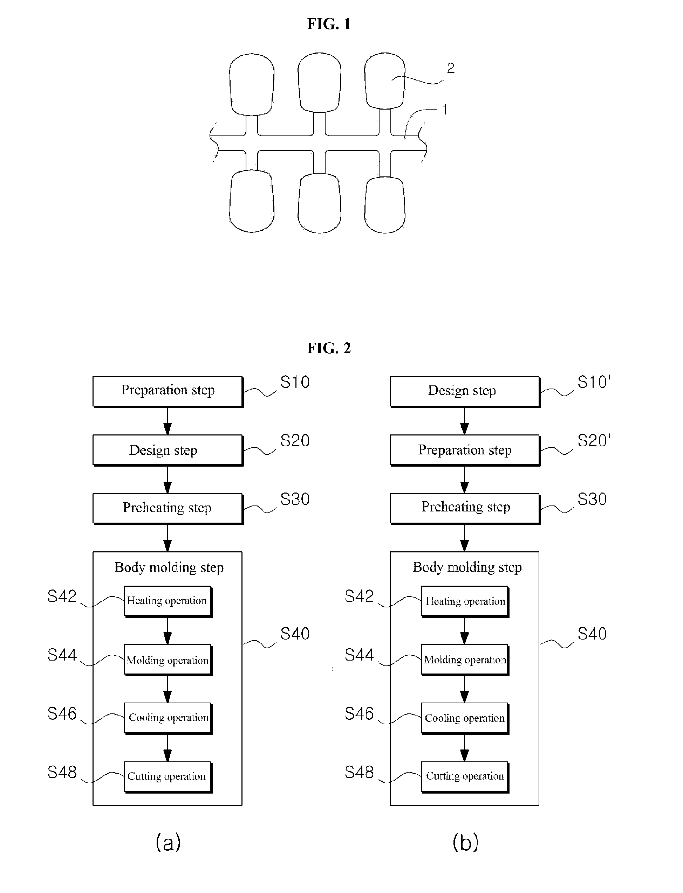

Generally, the painting of nail polish for beauty is troublesome and it is impossible for an unskilled person to form various designs on nails. There is a limitation in painting nail polish in a state in which the original shapes of nails are maintained. Many attempts to overcome this limitation have been made. For example, artificial nails with nail shapes are used to effectively improve the shapes of nails. Such artificial nails are manufactured by injection molding. As illustrated in FIG. 1, molded artificial nails should be separated from a connection stem after injection molding. Specifically, a material for artificial nails is fed into an injection molding machine having a pair of positive and negative injection molds and is molded into nail shapes. After molding in the injection molding machine, artificial nails 2 remain attached to a connection stem 1. The artificial nails attached to the stem 1 are decorated with predetermined colors or shapes by curved surface printing or spray printing. The artificial nails are printed only by curved surface printing due to their curved shapes. For this reason, elaborate designs cannot be printed on the surfaces of the artificial nails 2. Nail walls formed at the sides of the artificial nails cannot be completely printed by curved surface printing, making it impossible to increase the yield of artificial nails with good quality.

According to the conventional method for manufacturing artificial nails by injection molding, the number of artificial nails manufactured at a time is not large due to the limited number of cavities in the injection molds. When the artificial nails 2 are detached from the stem 1, portions of the stem 1 may remain unremoved on the artificial nails 2. In this case, a user should trim the surfaces of the artificial nails 2 before the artificial nails 2 are applied to fingernails. This trimming may cause deformation of the artificial nails 2. Furthermore, in the case of injection molding, materials for artificial nails are limited to ABS resins. Materials other than ABS resins are not suitable for the manufacture of artificial nails. Moreover, when artificial nails are shaped by injection molding, it is difficult to reduce the thicknesses of the artificial nails below a predetermined level, which is a cause of pain in the cuticles.

Thus, there arises a need for a method for manufacturing artificial nails by which various designs can be elaborately printed on the entire areas of artificial nails and the wearability of the artificial nails at cuticle ends can be improved while maintaining the strength of the tips (i.e. free edges) of the artificial nails.

### Prior Art Documents

### Patent Documents

(Patent Document 1) KR 10-0765333 B1

### SUMMARY OF THE INVENTION

The present invention has been made in an effort to solve the above problems, and it is a first object of the present invention to provide a method for manufacturing artificial nails by which the strength of the tips of artificial nails formed corresponding to the free edges of fingernails can be increased, the wearability of the artificial nails at cuticle ends formed corresponding to the cuticles of the fingernails can be improved, and various designs can be elaborately printed on the artificial nails.

It is a second object of the present invention to provide artificial nails, which are manufactured by the method, that are as strong as fingernails, have improved wearability, and are decorated with various and elaborate designs.

To achieve the first object of the present invention, there is provided a method for manufacturing artificial nails, each of which includes a cuticle end to be attached to the cuticle of a fingernail and a free edge disposed opposite the cuticle end, the method including:
a preparation step of supplying a film including a planar design surface and a bent support surface formed opposite the design surface;
a design step of decorating the design surface of the film; and
a body molding step including a molding operation of forming the film into three-dimensional shapes in shaping molds including a plurality of artificial nail casts with fingernail shapes and reference plates connecting the artificial nail casts, and a cutting operation of cutting the film formed with a plurality of fingernail shapes into the individual fingernail shapes by a cutter located above the shaping molds.

In a preferred embodiment of the present invention, the design step is carried out to form artificial nail patterns on areas of the design surface of the film defined by first end portions formed at the cuticle ends and second end portions formed at the free edges, the artificial nail patterns being formed such that the first end portions and the second end portions are formed at locations where the cuticle ends are smaller in thickness than the free edges, and the preparation step is carried out to supply the film to a printer where the design step is carried out.

Preferably, the design step is carried out to bond a patterned design paper to the design surface of the film, and the preparation step is carried out to supply the film, to which the design paper is bonded, to the shaping molds.

Preferably, the method further includes preheating the film below the glass transition temperature of the film before feeding into the shaping molds.

Preferably, the support surface of the film includes first support surfaces in the form of flat plates along the lengthwise or widthwise direction of the film, second support surfaces situated higher than the first support surfaces such that they have smaller thicknesses than the distances between the design surface and the first support surfaces and in the form of flat plates in the direction parallel to the first support surfaces, and inclined surfaces formed between the first support surfaces and the second support surfaces.

Preferably, each of the artificial nail casts of the shaping molds includes a molding portion where a snug fit located at the cuticle end is molded, and a molding portion where a nail bed between the snug fit molding portion and the free edge is molded, and the snug fit molding portion is bent downward from the nail bed molding portion.

Preferably, in the body molding step, the film is rested in the shaping molds such that the second support surface is located in the snug fit molding portions.

Preferably, snug fit molding portions are further provided at sides of the nail bed molding portions located between the cuticle end and both ends of the free edge.

Preferably, the film is molded in the shaping molds by applying a negative pressure thereto.

Preferably, the body molding step further includes the operation of heating the film rested in the shaping molds to a temperature equal to or higher than the glass transition temperature of the film before the application of a negative pressure to the film.

Preferably, the shaping molds further include a heater for heating the shaping molds to a temperature equal to or higher than the glass transition temperature of the film, and the heating operation includes a hot-plate heating process in which the film is heated by heat from the shaping molds.

Preferably, a hot air blower is movably provided on the shaping molds to heat the film to a temperature equal to or higher than the glass transition temperature of the film, and the heating operation includes a hot-air heating process in which the film is heated by hot air from the hot air blower.

Preferably, the hot air blower blows air in a direction where the film is tightly attached to the shaping molds.

Preferably, the body molding step further includes the operation of cooling the film between the molding operation and the cutting operation.

Preferably, the film molded in the body molding step includes base portions molded in the reference plates and artificial nail portions molded in the artificial nail casts, and the cutting operation is performed to cut between the base portions and the artificial nail portions.

Preferably, the cutter includes blades adapted to cut between the base portions and the artificial nail portions, and the blades reciprocate in a direction inclined at an angle of 5° to 90° with respect to the direction perpendicular to the reference plates.

Preferably, the film supplied to the shaping molds has at least one shape of roll and sheet shapes.

To achieve the second object of the present invention, there is provided an artificial nail manufactured by the method, including a nail bed that is to be rested on the bed of a fingernail and has one end formed corresponding to the cuticle of the fingernail and the other end formed corresponding to the free edge of the fingernail and thicker than the one end.

In a preferred embodiment of the present invention, the artificial nail further includes a snug fit bent downward from and connected to the one end of the nail bed and having a thickness equal to or smaller than the thickness of the one end of the nail bed.

Preferably, the film is made of a material selected from the group consisting of: olefinic, PVC-based, ABS-based, urethane-based, ether-based, amide-based and acrylic polymers; olefinic, PVC-based, ABS-based, urethane-based, ether-based, amide-based and acrylic derivatives; copolymers of at least two polymers or derivatives of olefinic polymers, PVC-based polymers, ABS-based polymers, urethane-based polymers, ether-based polymers, amide-based polymers, acrylic polymers, olefinic derivatives, PVC-based derivatives, ABS-based derivatives, urethane-based derivatives, ether-based derivatives, amide-based derivatives and acrylic derivatives; and blends of at least two polymers or derivatives of olefinic polymers, PVC-based polymers, ABS-based polymers, urethane-based polymers, ether-based polymers, amide-based polymers, acrylic polymers, olefinic derivatives, PVC-based derivatives, ABS-based derivatives, urethane-based derivatives, ether-based derivatives, amide-based derivatives and acrylic derivatives.

Preferably, an artificial nail pattern of the artificial nail further includes at least one three-dimensional decorative part protruding from the design surface, and the three-dimensional decorative part includes: a design layer including at least one portion of a glittering reflective portion formed on the design surface and a planar design portion formed on the design surface; a coating layer formed on the design layer; and a three-dimensional layer protruding from a portion of the upper surface of the coating layer or the entire area of the upper surface of the coating layer.

The method of the present invention enables the manufacture of artificial nails having different thicknesses depending on their locations mounted on fingernails. Therefore, the wearability of the artificial nails can be improved and the strength of the tips of the artificial nails can be maintained, resulting in an improvement in the shape of fingernails. According to the method of the present invention, designs are printed on a planar shape, followed by molding into curved shapes. Therefore, various patterns can be applied to artificial nails during the design printing. In addition, the finished artificial nails can be worn on fingernails without gaps therebetween. Therefore, dust can be prevented from entering gaps between the artificial nails and the fingernails.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a plan view of general artificial nails manufactured by injection molding;
FIG. 2 illustrates flow charts of methods for manufacturing artificial nails according to embodiments of the present invention;
FIG. 3 illustrates perspective views of films printed in design steps of methods for manufacturing artificial nails according to embodiments of the present invention;
FIG. 4 schematically illustrates a body molding step of a method for manufacturing artificial nails according to one embodiment of the present invention;
FIG. 5 is a schematic view illustrating a cutting operation of a method for manufacturing artificial nails according to one embodiment of the present invention; and
FIG. 6 illustrates a plan view and cross-sectional views of an artificial nail according to one embodiment of the present invention.

### DETAILED DESCRIPTION OF THE INVENTION

Preferred embodiments of the present invention will now be described in more detail. However, it will be obvious to those skilled in the art that these embodiments further illustrate the invention but do not serve to limit the scope of the invention.

According to a conventional method for manufacturing artificial nails, artificial nail bodies with three-dimensional curved shapes are formed by injection molding, and then designs are printed thereon. In contrast, according to the method of the present invention, designs are printed on a planar film 110, and the designed film 110 is molded into artificial nails 120' having curved surface shapes, thereby realizing the designs in an elaborate manner. In addition, the thickness of the film 110 can be varied to allow the artificial nails 120' to have a strength identical to injection-molded artificial nails. Furthermore, when the artificial nails 120' are separated from the film 110 by cutting, the film 110 is prevented from parting. Therefore, the rim shapes of the artificial nails manufactured by the method of the present invention are more trimmed than those of artificial nails manufactured by conventional injection molding and artificial nails separated by a conventional cutting operation.

FIG. 2 illustrates flow charts of methods for manufacturing artificial nails according to embodiments of the present invention.

The present invention provides a method for manufacturing artificial nails, each of which includes a cuticle end 122' to be attached to the cuticle of a fingernail and a free edge 124' disposed opposite the cuticle end 122'. Specifically, the method of the present invention includes: a preparation step S10 or S20' of supplying a film 110 including a planar design surface 111 and a bent support surface 112 formed opposite the design surface 111; a design step S10' or S20 of decorating the design surface of the film; and a body molding step S40 including a molding operation S44 of forming the film 110 into three-dimensional shapes in shaping molds 210 and 220 including a plurality of artificial nail casts 212 and 222 with fingernail shapes and reference plates 213 and 233 connecting the artificial nail casts 212 and 222, and a cutting operation S48 of cutting the film 110 formed with a plurality of fingernail shapes into the individual fingernail shapes.

In the method of the present invention, the order of the preparation step S10 or S20' and the design step S10'or S20 is determined depending on how to form patterns on the design surface 111 of the film 110, which is molded into the artificial nails 120' in the subsequent molding step.

As illustrated in FIG. 2a, the design step S20 may be carried out after the preparation step S10. In the design step, artificial nail patterns 120 are formed on areas of the design surface 111 of the film 110 defined by first end portions 122 formed at the cuticle ends 122' and second end portions 124 formed at the free edges 124', the artificial nail patterns 120 being formed such that the first end portions 122 and the second end portions 124 are formed at locations where the cuticle ends 122' are smaller in thickness than the free edges 124'. In the preparation step S10, the film 110 is supplied to a printer where the design step S20 is carried out.

As illustrated in FIG. 2b, the preparation step S20' may be carried out after the design step S10'. Specifically, in the design step S10', a patterned design paper may be bonded to the design surface 111 of the film 110. The design paper used herein refers to a paper that is patterned on the entire surface thereof. The design paper is prepared by laminating a patterned design paper on a film. Alternatively, patterns may be formed on the entire area of the design surface 111 of the film 110. In this case, the design surface 111 is formed into a design paper. In the preparation step S20', the film 110, to which the design paper is bonded, is supplied to the shaping molds. Accordingly, the design surface 111 of the film 110 may be formed by lamination of appropriate design papers designed with various patterns. Examples of such design papers include design papers provided with prism sheets to exhibit various colors depending on the angle of light, design papers capable of expressing lenticular effects to effectively offer three-dimensional shapes, design papers capable of expressing light reflection effects, and design papers made of fibers. Patterns may also be formed on the entire area of the design surface 111 by suitable printing techniques, for example, transfer printing.

The support surface 112 of the film 110 provided in the preparation step S10 is bent. Due to this structure, the film 110 can be molded into the artificial nails 120' having different thicknesses depending on the sites of fingernails where the artificial nails are applied. Specifically, the cuticle end 122' has a smaller thickness and the free edges 124' has a larger thickness than the central portion of each artificial nail 120'. This structure can enhance the wearability of the artificial nails 120' when the artificial nails 120' are mounted on corresponding fingernails, and can maintain the initial shapes of the artificial nails 120' despite attachment for a long time because of high stiffness of the free edges 124', which are continuously exposed to external forces.

In the design step S20, when artificial nail patterns 120 are printed on the design surface 111 using a printer, a seating portion of the printer in contact with the support surface 112 of the film 110 is formed corresponding to the shape of the support surface 112 of the film 110 to maintain the planar shape of the design surface 111. The first end portions 122 and the second end portions 124 of the artificial nail patterns 120 are arranged such that the free edges 124' of the artificial nails 120' are formed at locations where the film 110 is thicker and the cuticle ends 122' of the artificial nails 120' are formed at locations where the film 110 is thinner. With this arrangement, the artificial nails 120' have different thicknesses depending on their locations attached onto fingernails.

That is, in the design step S20 of the present invention, the design surface 111 of the planar film 110 having different thicknesses depending on the positions is printed. After the artificial nail patterns 120 are printed on the planar design surface 111, the film 110 is transferred to shaping molds 210 and 220. In the shaping molds 210 and 220, nail beds with fingernail shapes are formed at locations where the artificial nail patterns 120 are printed. After artificial nail portions 115 in the shape of nail beds are formed in the film 110, the film 110 is cut along the circumferences of the artificial nail portions 115 in the shape of fingernails. After the body molding step S40 including molding and cutting, the film 110 is shaped into artificial nails. Accordingly, according to the method of the present invention, elaborate patterns can be freely designed on the film formed with the two-dimensional design surface by various printing techniques, and at the same time, the film can be molded into curved artificial nail shapes. In addition, the appearance of fingernails can be improved and various designs can be easily applied to fingernails.

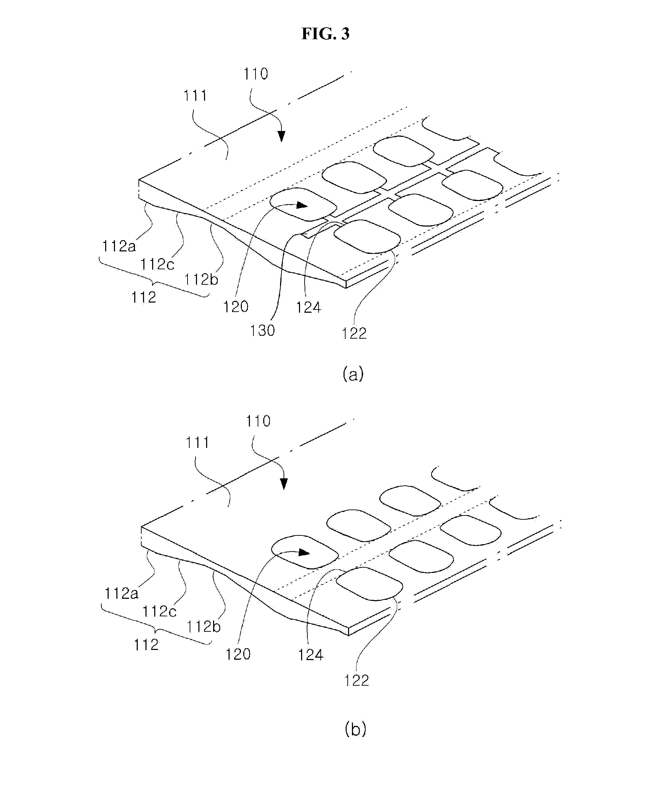

FIG. 3 illustrates perspective views of films printed in design steps of methods for manufacturing artificial nails according to embodiments of the present invention.

The film 110 provided in the preparation step S10 has a bent lower surface and a planar upper surface. Patterns of the artificial nails 120' can be printed on the two-dimensional surface of the film 110 in the design step S20. Accordingly, compared to printing on a three-dimensional curved surface, various elaborate designs can be printed in a state in which the bent portions formed on the lower surface of the film are supported to maintain the design surface 111 formed on the film in a plate-like shape. Furthermore, a pressure applied to the film 110 is uniformly dispersed during printing, resulting in an increase in the yield of the final artificial nails 120' with good quality.

The support surface 112 may be formed into a curved shape. Alternatively, the support surface 112 may include first support surfaces 112a in the form of flat plates along the lengthwise or widthwise direction of the film 110, second support surfaces 112b situated higher than the first support surfaces 112a such that they have smaller thicknesses than the distances between the design surface 111 and the first support surfaces 112a and in the form of flat plates in the direction parallel to the first support surfaces 112a, and inclined surfaces 112c formed between the first support surfaces 112a and the second support surfaces 112b. The seating portion of the printer (not shown) can support the plate-like first support surfaces 112a and the second support surfaces 112b to maintain the design surface 111 in the shape of a flat plate. The seating portion of the printer may include a first seating element adapted to support the first support surface 112a and a second seating element adapted to support the second support surface 112b. The heights of the first and second seating elements are adjustable depending on the heights of the first and second support surfaces 112a and 112b.

Generally, when it is intended to manufacture the artificial nails 120', the cuticle ends 122' of the artificial nails 120' are located at the cuticles of fingernails and the free edges 124' of the artificial nails 120' are located at the free ends in directions where the fingernails grow. Accordingly, in the design step S20 of printing the artificial nail patterns 120 on the film 110, the artificial nail patterns 120 may be printed on the planar design surface 111 of the film 110. The artificial nail patterns 120 may have the same sizes as the final artificial nails 120'. Alternatively, the artificial nail patterns 120 may be printed on areas larger than the areas of the final artificial nails 120'. In this case, the occurrence of errors in the cutting operation S48 is minimized.

The first end portions 122 of the artificial nail patterns 120 are border lines of the artificial nail patterns 120 formed at locations adjacent to the cuticle ends 122' of the final artificial nails 120', and the second end portions 124 are border lines of the artificial nail patterns 120 formed at locations adjacent to the free edges 124' of the final artificial nails 120'. To assist in a further understanding of the invention, FIG. 3 exemplifies that the artificial nail patterns 120 have the same outer shapes as the final artificial nails 120'. Although FIG. 3 illustrates that the first end portions 122 overlap the cuticle ends 122' and the second end portions 124 overlap the free edges 124', the first end portions 122 and the second end portions 124 of the artificial nail patterns 120 may extend radially outwardly from the cuticle ends 122' and the free edges 124', respectively. In the body molding step of the method according to the present invention, the film may be molded such that the artificial nails are connected to a single connection stem, followed by cutting. Alternatively, the artificial nails may be molded and cut into individual shapes.

According to the present invention, the artificial nails 120' with various shapes can be elaborately printed by designing the artificial nail patterns on the two-dimensional surface. In addition, the three-dimensional artificial nails 102' have a strength above a predetermined level to offer an improvement in the shape of fingernails. Furthermore, the artificial nails 120' may have different thicknesses depending on their locations applied to fingernails, thereby achieving improved wearability while continuously maintaining the shapes of the free edges 124' of the artificial nails 120', which are easily exposed to external forces.

In the design step S20 illustrated in FIG. 3(a), the artificial nail patterns 120 are printed on the film 110 such that the second support surfaces 112b are located in snug fit molding portions 212a and 222a. The first end portions 122 forming the cuticle ends 122' may be located on areas defined by the second support surfaces 112b having the smallest thickness. That is, the artificial nail patterns 120 may be printed based on the positions of the second support surfaces 112b. Connection stem patterns 130 connected to sides of the second end portions 124 of the artificial nail patterns 120 may be printed on the design surface 111 of the film.

As illustrated in FIG. 3(b), only the artificial nail patterns 120 may be printed without the connection stem patterns 130. The second end portions 124 of the artificial nail patterns 120 may be located on areas defined by the first support surfaces 112a having the largest thickness. FIG. 3(b) illustrates that the artificial nail patterns 120 are printed on areas defined by the first end portions 112a and the second end portions 112c, but the printing areas of the artificial nail patterns 120 are not limited to the areas. The artificial nail patterns 120 may be printed on any areas of the film so long as the areas of the film 110 where the first end portions 122 of the artificial nail patterns 120 are formed are smaller in thickness than the areas of the film 110 where the second end portions 124 are formed.

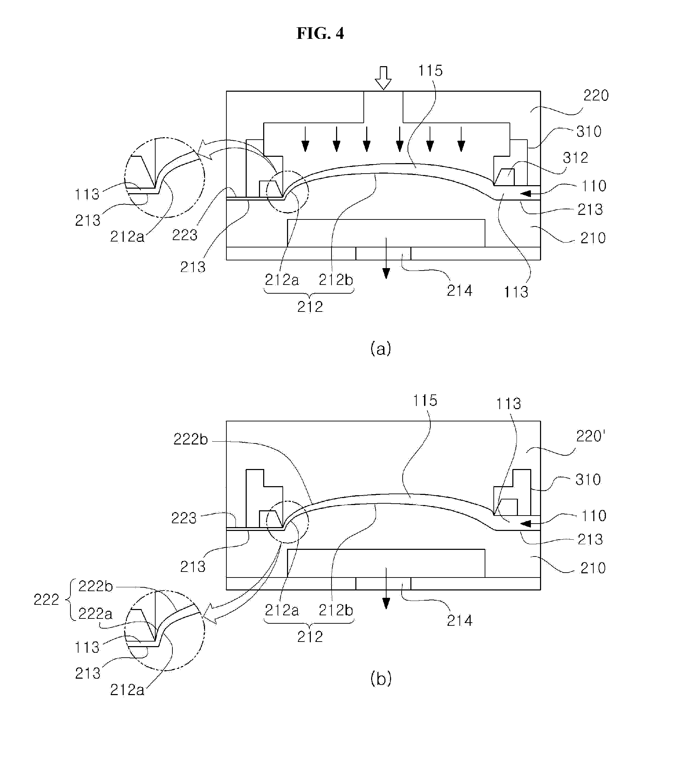

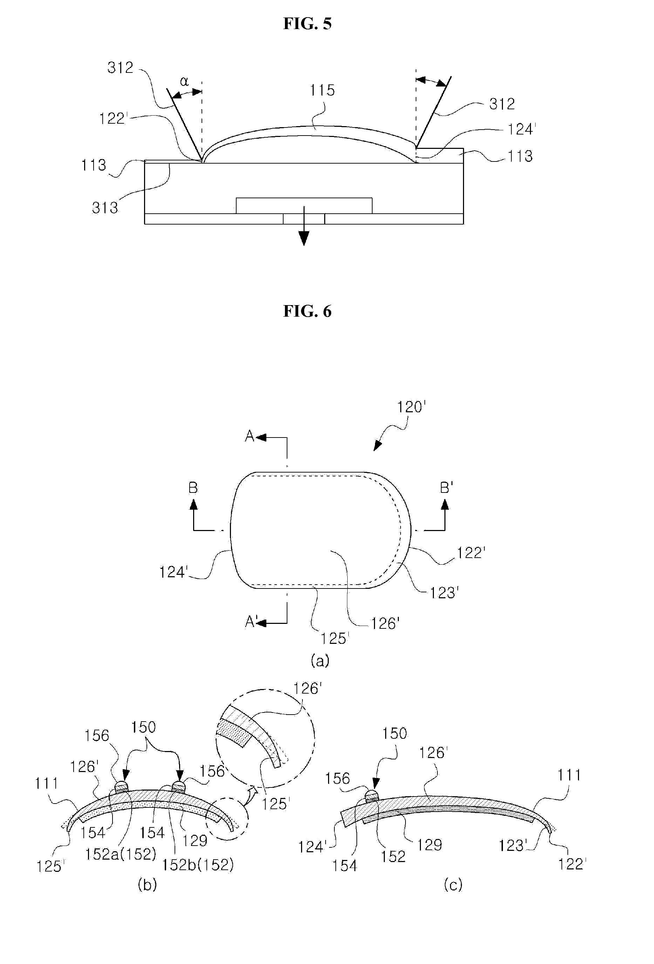

FIG. 4 schematically illustrates a body molding step of a method for manufacturing artificial nails according to one embodiment of the present invention, and FIG. 5 is a schematic view illustrating a cutting operation of a method for manufacturing artificial nails according to one embodiment of the present invention.

The film 110 having undergone the design step S20 is transferred to the shaping molds 210 and 220 where the body molding step S40 is carried out. The shaping molds 210 and 220 include a plurality of artificial nail casts 212 and 222 and reference plates 213 and 223 connecting the artificial nail casts 212 and 222. As illustrated in FIG. 4, the film 110 is supplied between the pair of negative and positive shaping molds 210 and 220, and is pressurized to form desired shapes of the artificial nails 120'. Particularly, the shaping molds 210 and 220 include a negative pressure-forming part 214 adapted to apply a negative pressure to the film 110. The negative pressure brings the film 110 into close contact with the artificial nail casts 212 and 222 formed in the shaping molds 210 and 220 to form shapes of the artificial nails 120'.

According to the present invention, the artificial nails 120' with various shapes can be elaborately printed by designing the artificial nail patterns on the two-dimensional surface. In addition, the three-dimensional artificial nails 120' have a strength above a predetermined level to offer an improvement in the shape of fingernails. Furthermore, the artificial nails 120' may have different thicknesses depending on their locations applied to fingernails, thereby achieving improved wearability while continuously maintaining the shapes of the free edges 124' of the artificial nails 120', which are easily exposed to external forces. In the body molding step S40 illustrated in FIG. 4(a), the film 110 is rested in the shaping molds 210 and 220 such that the second support surfaces 112b are located in the snug fit molding portions 212a and 222a. The second support surfaces 112b having the smallest thickness are located in the snug fit molding portions 212a and 222a of the artificial nail casts 212 to achieve increased wearability. The smaller the thicknesses of the cuticle ends 122' of the artificial nails 120' to be located at the cuticles of fingernails, the better the wearability of the artificial nails 120'. Accordingly, the second support surfaces 112b disposed opposite the positions of the artificial nail patterns 120 are rested in the snug fit molding portions 212a and 222a such that snug fits located at the cuticle ends 122' are formed to small thicknesses.

The method of the present invention may further include preheating the film 110 below the glass transition temperature of the film before feeding into the shaping molds 210 and 220. Specifically, the film 110 is preheated below the glass transition temperature at which the shape of the film 110 begins to deform, and is then supplied to the shaping molds 210 and 220. The film 110 is not deformed in shape before the molding operation S44. The film 110 may be continuously supplied from rollers. Alternatively, the film 120 may be supplied in the shape of a sheet. In this case, the film 110 in the shape of a sheet can be supported with a uniform force in a preheated state. In addition, since the film 110 is spaced apart from a subsequent film, the subsequent film is ready for molding when the film 110 is molded in the molding operation S44. Accordingly, the subsequent film can be prevented from deformation. That is, deformation of the film 110 in the shape of a sheet can be minimized.

In the body molding step S40, the film 110 may also be molded simply by pressurization. Alternatively, the film 110 may be molded in the shaping molds 210 and 220 including the negative pressure-forming part 214. In the shaping molds 210 and 220, the film 110 may be molded into the shapes of the artificial nails 120' by a negative pressure. The film 110 may be heated during molding. In this case, the artificial nail portions 115 may be more precisely formed. The film 110 heated in the heating operation S42 is cooled after completion of the molding in the body molding step S40. This cooling enables sharp cutting of the film 110 into fingernail shapes depending on the shapes of the artificial nail portions 115 in the cutting operation 548.

Preferably, the body molding step further includes the operation of heating the film 110 rested in the shaping molds 210 and 220 to a temperature equal to or higher than the glass transition temperature of the film 110 before the application of a negative pressure (S42). Preferably, the body molding step further includes the operation of cooling the film 110 between the molding operation S44 and the cutting operation S48 (S46). In the cooling operation S46, the temperature of the film 110 is reduced, particularly, below the glass transition temperature to maintain the shapes of the molded film 110.

The heating operation S42 may be performed in various ways. As an example, the heating operation S42 may be performed by a hot-plate heating process in which a heater is provided in the shaping molds 210 and 220 to heat the film 110 to a temperature equal to or higher than the glass transition temperature and the film 110 is heated by contact with the shaping molds 210 and 220.

Alternatively, the heating operation S42 may be performed by a hot-air heating process in which a hot air blower (not shown) is movably provided on the shaping molds 210 and 220 to heat the film 110 to a temperature equal to or higher than the glass transition temperature and the film 110 is heated by hot air from the hot air blower, as illustrated in FIG. 4a. The hot air blower blows hot air in a direction where the film 110 is tightly attached to the shaping molds 210 and 220. This facilitates the application of a negative pressure to the film 110.

The film 110 having undergone the heating operation S42 and the molding operation S44 is cooled below the glass transition temperature in the cooling operation S46. The molded film 110 is divided into base portions 113 molded in the reference plates and the artificial nail portions 115 molded in the artificial nail casts 212 and 222. In the cutting operation S48, a cutter 312 is used to cut between the base portions 113 and the artificial nails.

The artificial nails 120' are attached to fingernails using double-sided adhesive tapes or an adhesive. If gaps are created between the artificial nails 120' and the fingernails by the thickness of the double-sided adhesive tapes or the adhesive, dust or hairs may enter the gaps. In the present invention, this problem is solved by forming the snug fit molding portions 212a and 222a and nail bed molding portions 212b and 222b in the artificial nail casts 212 and 222 of the shaping molds 210 and 220. Snug fits are located at the cuticle ends 122' of the artificial nails 120'. Snug fits may be further provided at nail walls, i.e. both sides of each artificial nail. That is, snug fits 123' may be formed at the cuticle ends 122' of the artificial nails 120' to prevent the formation of gaps between the artificial nails 120' and fingernails.

Accordingly, the snug fits 123' located at the cuticle ends 122' are molded in the snug fit molding portions 212a and 222a of the artificial nail casts 212 and 222, and nail beds between the snug fit molding portions 212a and 222a and the free edges 124' are molded in the nail bed molding portions 212b and 222b of the artificial nail casts 212 and 222. The snug fit molding portions 212a and 222a are bent downward from the nail bed molding portions 212b and 222b. That is, the snug fit molding portions 212a and 222a are bent downward from the nail bed molding portions 212b and 222b such that snug fits 123' and 125' are formed to have curvatures larger than those of the nail beds of the artificial nails 120' to be attached onto the nail beds of fingernails. The downward bending includes a bent structure of the artificial nails 120' in which the nail beds are clearly distinguished from the snug fits. Included also is a structure in which the cuticle ends 122' the artificial nails 120' formed with the snug fits are formed below the extension lines of the curvatures of the nail beds. Snug fit molding portions 212a and 222a may be further provided at sides of the nail bed molding portions 212b and 222b located between the cuticle end 122' and both ends of the free edge 124'. That is, the sung fits 125' may be formed at both sides of each artificial nail 120'.

The film 110 molded in the shaping molds 210 and 220 includes the base portions 113 molded in the reference plates 213 and 223 and the artificial nail portions 115 molded in the artificial nail casts 212 and 222. That is, the molded film 110 can be divided into the base portions 113 and the artificial nail portions 115. The artificial nail portions 115 include the snug fits and the nail beds. In the cutting operation S48, it is preferred to cut between the base portions 113 and the artificial nail portions 115. In the present invention, the artificial nail portions 115 are sharply cut along the shapes of the rims thereof when it is intended to separate the base portions 113 and the artificial nail portions 115. That is, when blades 312 are moved down from the top to cut the film 110, a force applied by the blades 312 prevents the film 10 from parting.

That is, the curved artificial nail portions 115 are not directly cut and the border lines between the base portions 113 and the artificial nail portions 115 are cut so that the cutter 310 stably supports the planes to be cut by the blades 312 to prevent the film from parting. The border lines mean the interfaces where the curved surfaces meet the planar surfaces. The blades 312 of the cutter 310 are used to cut between the base portions 113 and the artificial nail portions 115. The blades reciprocate in a direction inclined at an angle of 5° to 90° with respect to the direction perpendicular to the reference plates 213 and 233 to cut the film 110. If the inclined angle of each blade 312 is less than 5°, only a portion of the film 110 is cut by the blade 312 and the other portion of the film 110 is parted. That is, the rims of the artificial nails are cut ruggedly. Meanwhile, if the inclined angle of each blade 312 exceeds 90°, the reference plates of the shaping molds 210 and 220 interfere with the driving path of the blade 312. Accordingly, it is preferred that the blades 312 reciprocate in a direction inclined at an angle of 5° to 90° with respect to the direction perpendicular to the reference plates 213 and 233.

FIG. 5 illustrates different heights of the blade 312 for cutting the cuticle end 122' and the blade 312 for cutting the free edge 124', but the heights of the blades 312 are not limited. The time points when the blades 312 begin to cut may be different.

FIG. 6 illustrates a plan view and cross-sectional views of an artificial nail according to one embodiment of the present invention.

The present invention also provides an artificial nail 120' manufactured by the above method. The artificial nail 120' of the present invention includes a cuticle end 122' to be attached to the cuticle of a fingernail and a free edge 124' disposed opposite the cuticle end 122'. The artificial nail includes a nail bed 126' that is to be rested on the bed of a fingernail. The nail bed 126' has one end formed corresponding to the cuticle of the fingernail and the other end formed corresponding to the free edge 124' of the fingernail and thicker than the one end. The artificial nail 120' can be elaborately designed with various patterns. In addition, the artificial nail 120' has a strength above a predetermined level to offer an improvement in the shape of a fingernail.

According to a preferred embodiment of the present invention, the artificial nail 120' further includes a snug fit bent downward from and connected to the one end of the nail bed and having a thickness equal to or smaller than the thickness of the one end of the nail bed.

Preferably, the film 110' is made of a material selected from the group consisting of: olefinic, PVC-based, ABS-based, urethane-based, ether-based, amide-based and acrylic polymers; olefinic, PVC-based, ABS-based, urethane-based, ether-based, amide-based and acrylic derivatives; copolymers of at least two polymers or derivatives of olefinic polymers, PVC-based polymers, ABS-based polymers, urethane-based polymers, ether-based polymers, amide-based polymers, acrylic polymers, olefinic derivatives, PVC-based derivatives, ABS-based derivatives, urethane-based derivatives, ether-based derivatives, amide-based derivatives and acrylic derivatives; and blends of at least two polymers or derivatives of olefinic polymers, PVC-based polymers, ABS-based polymers, urethane-based polymers, ether-based polymers, amide-based polymers, acrylic polymers, olefinic derivatives, PVC-based derivatives, ABS-based derivatives, urethane-based derivatives, ether-based derivatives, amide-based derivatives and acrylic derivatives.

The artificial nail 120' has an artificial nail pattern 120 formed in a planar or three-dimensional design. Preferably, the artificial nail pattern 120 further includes three-dimensional decorative parts 150 protruding from the design surface 111, and each of the three-dimensional decorative parts 150 includes: a design layer 152 including at least one portion of a glittering reflective portion 152a formed on the design surface 111 and a planar design portion 152b formed on the design surface; a coating layer 154 formed on the design layer 152; and a three-dimensional layer 156 protruding from a portion of the upper surface of the coating layer 154 or the entire area of the upper surface of the coating layer 154.

Minor modifications and variations of the present invention can be readily made by those skilled in the art. Such modifications and variations are intended to come within the scope of the appended claims.

## Claims

1. A method for manufacturing artificial nails, each of which comprises a cuticle end to be attached to the cuticle of a fingernail and a free edge disposed opposite the cuticle end, the method comprising:
a preparation step of supplying a film comprising a planar design surface and a bent support surface formed opposite the design surface;
a design step of decorating the design surface of the film; and
a body molding step comprising a molding operation of forming the film into three-dimensional shapes in shaping molds comprising a plurality of artificial nail casts with fingernail shapes and reference plates connecting the artificial nail casts, and a cutting operation of cutting the film formed with a plurality of fingernail shapes into the individual fingernail shapes by a cutter located above the shaping molds.

2. The method according to claim 1, wherein the design step is carried out to form artificial nail patterns on areas of the design surface of the film defined by first end portions formed at the cuticle ends and second end portions formed at the free edges, the artificial nail patterns being formed such that the first end portions and the second end portions are formed at locations where the cuticle ends are smaller in thickness than the free edges, and the preparation step is carried out to supply the film to a printer where the design step is carried out.

3. The method according to claim 1, wherein the design step is carried out to bond a patterned design paper to the design surface of the film, and the preparation step is carried out to supply the film, to which the design paper is bonded, to the shaping molds.

4. The method according to claim 1, further comprising preheating the film below the glass transition temperature of the film before feeding into the shaping molds.

5. The method according to claim 1, wherein the support surface of the film comprises first support surfaces in the form of flat plates along the lengthwise or widthwise direction of the film, second support surfaces situated higher than the first support surfaces such that they have smaller thicknesses than the distances between the design surface and the first support surfaces and in the form of flat plates in the direction parallel to the first support surfaces, and inclined surfaces formed between the first support surfaces and the second support surfaces.

6. The method according to claim 5, wherein each of the artificial nail casts of the shaping molds comprises a molding portion where a snug fit located at the cuticle end is molded, and a molding portion where a nail bed between the snug fit molding portion and the free edge is molded, and the snug fit molding portion is bent downward from the nail bed molding portion.

7. The method according to claim 6, wherein, in the body molding step, the film is rested in the shaping molds such that the second support surfaces are located in the snug fit molding portions.

8. The method according to claim 6, wherein snug fit molding portions are further provided at sides of the nail bed molding portions located between the cuticle end and both ends of the free edge.

9. The method according to claim 1, wherein the film is molded in the shaping molds by applying a negative pressure thereto.

10. The method according to claim 9, wherein the body molding step further comprises the operation of heating the film rested in the shaping molds to a temperature equal to or higher than the glass transition temperature of the film before the application of a negative pressure to the film.

11. The method according to claim 10, wherein the shaping molds further comprise a heater for heating the shaping molds to a temperature equal to or higher than the glass transition temperature of the film, and the heating operation comprises a hot-plate heating process in which the film is heated by heat from the shaping molds.

12. The method according to claim 10, wherein a hot air blower is movably provided on the shaping molds to heat the film to a temperature equal to or higher than the glass transition temperature of the film, and the heating operation comprises a hot-air heating process in which the film is heated by hot air from the hot air blower.

13. The method according to claim 12, wherein the hot air blower blows air in a direction where the film is tightly attached to the shaping molds.

14. The method according to claim 9, wherein the body molding step further comprises the operation of cooling the film between the molding operation and the cutting operation.

15. The method according to claim 1, wherein the film molded in the body molding step comprises base portions molded in the reference plates and artificial nail portions molded in the artificial nail casts, and the cutting operation is performed to cut between the base portions and the artificial nail portions.

16. The method according to claim 15, wherein the cutter comprises blades adapted to cut between the base portions and the artificial nail portions, and the blades reciprocate in a direction inclined at an angle of 5° to 90° with respect to the direction perpendicular to the reference plates.

17. The method according to claim 1, wherein the film supplied to the shaping molds has at least one shape of roll and sheet shapes.

18. An artificial nail manufactured by the method according to any one of claims 1 to 17, comprising a nail bed that is to be rested on the bed of a fingernail and has one end formed corresponding to the cuticle of the fingernail and the other end formed corresponding to the free edge of the fingernail and thicker than the one end.

19. The artificial nail according to claim 18, wherein the artificial nail further comprises a snug fit bent downward from and connected to the one end of the nail bed and having a thickness equal to or smaller than the thickness of the one end of the nail bed.

20. The artificial nail according to claim 18, wherein the film is made of a material selected from the group consisting of: olefinic, PVC-based, ABS-based, urethane-based, ether-based, amide-based and acrylic polymers; olefinic, PVC-based, ABS-based, urethane-based, ether-based, amide-based and acrylic derivatives; copolymers of at least two polymers or derivatives of olefinic polymers, PVC-based polymers, ABS-based polymers, urethane-based polymers, ether-based polymers, amide-based polymers, acrylic polymers, olefinic derivatives, PVC-based derivatives, ABS-based derivatives, urethane-based derivatives, ether-based derivatives, amide-based derivatives and acrylic derivatives; and blends of at least two polymers or derivatives of olefinic polymers, PVC-based polymers, ABS-based polymers, urethane-based polymers, ether-based polymers, amide-based polymers, acrylic polymers, olefinic derivatives, PVC-based derivatives, ABS-based derivatives, urethane-based derivatives, ether-based derivatives, amide-based derivatives and acrylic derivatives.

21. The artificial nail according to claim 18, wherein an artificial nail pattern of the artificial nail further comprises at least one three-dimensional decorative part protruding from the design surface, and the three-dimensional decorative part comprises: a design layer comprising at least one portion of a glittering reflective portion formed on the design surface and a planar design portion formed on the design surface; a coating layer formed on the design layer; and a three-dimensional layer protruding from a portion of the upper surface of the coating layer or the entire area of the upper surface of the coating layer.
